# FASCICULE DE BREVET EUROPEEN

(11) **EP 1 778 928 B1**
(45) Date de publication et mention de la délivrance du brevet: **07.03.2012**
(21) Numéro de dépôt: 05783881.5
(22) Date de dépôt: 29.06.2005
(51) Int. Cl.: E04C 2/04, D21H 19/42

(54) **PLAQUE DE PLATRE COMPORTANT AU MOINS UN PAPIER DE PAREMENT AVEC UNE SAUCE DE COUCHAGE COMPRENANT DES PIGMENTS PLASTIQUES, SAUCE DE COUCHAGE ET PROCEDE DE FABRICATION AFFERENT**
GIPSKARTONPLATTE MIT MINDESTENS EINEM BESCHICHTUNGSPAPIER MIT EINER PLASTIKPIGMENTE ENTHALTENDEN STREICHMASSE, STREICHMASSE UND DAZUGEHÖRIGES HERSTELLUNGSVERFAHREN
GYPSUM PLASTERBOARD COMPRISING AT LEAST A COVERING PAPER WITH A COATING SLIP COMPRISING PLASTIC PIGMENTS, COATING SLIP AND RELATED MANUFACTURING METHOD

(30) Priorité: 30.06.2004 FR 0407272
(43) Date de publication de la demande: 02.05.2007
(73) Titulaire: LAFARGE PLATRES, 84000 Avignon (FR)
(72) Inventeur: HEDMAN, Goran, Erik, F-30650 Rochefort du Gard (FR)
(74) Mandataire: Martin, Didier Roland Valéry
(86) Numéro de dépôt international: PCT/FR2005/001646
(87) Numéro de publication internationale: WO 2006/010853

(56) Documents cités:
- EP-A- 0 521 804
- WO-A-98/20201
- WO-A-99/63157
- US-A- 5 902 453

## Description

La présente invention concerne lé domaine technique général des matériaux de construction et en particulier celui relatif à la fabrication de plaques de plâtre préfabriquées comportant un corps de plâtre et au moins un papier ou carton de parement extérieur revêtu d'une sauce ou d'un enduit de couchage.

La présente invention concerne une plaque de plâtre comportant au moins un papier de parement formant l'extérieur de la plaque, le papier de parement sur lequel est déposée une sauce de couchage, étant destiné à améliorer l'effet visuel de la plaque de plâtre et/ou à permettre la pose d'un papier peint directement sur le papier de parement et sur la sauce de couchage préalablement déposée sur ledit papier.

La présente invention concerne également la sauce ou l'enduit de couchage proprement dit destiné à être étalé ou déposé sur le papier de parement.

La présente invention concerne également un procédé de fabrication d'une plaque de plâtre comportant au moins un papier de parement formant l'extérieur de la plaque, procédé dans lequel on dépose une sauce ou un enduit de couchage sur le papier de parement.

Enfin, la présente invention concerne également une nouvelle utilisation de composés intervenant dans la composition de sauces ou d'enduits de couchage en tant qu'agent de blanchiment dans une sauce de couchage pour papier de parement destiné à une plaque de plâtre.

### TECHNIQUE ANTERIEURE

Les plaques ou panneaux de plâtre sont bien connus et classiquement réalisés à partir d'un corps ou noyau de plâtre à base de gypse qui est déposé, en général par coulage, entre deux supports de papiers cartonnés assurant à la fois le maintien mécanique ou l'armature du plâtre ainsi que son parement extérieur par ses faces externes.

La fabrication de panneaux de plâtre de ce genre est bien connue et notamment décrite dans le brevet EP-A 0 521 804 du même demandeur, et à laquelle on se référera si besoin est.

Dans ce brevet antérieur, il est également prévu de déposer sur la face extérieure du papier de parement, une sauce de couchage ayant notamment pour objectif d'assurer un bon aspect esthétique de la couche externe du papier de parement en évitant notamment son jaunissement, et en lui assurant une bonne homogénéité de couleur blanche sans pour autant influencer négativement la fabrication du papier, sa tenue dans le temps et ses qualités de résistance, notamment mécaniques.

On recherche néanmoins, de manière constante, à obtenir des plaques de plâtre possédant des papiers de parement présentant de bonnes propriétés esthétiques de leurs couches externes tout en étant d'un coût réduit.

L'un des moyens envisagés consiste à réaliser le papier de parement à l'aide de matériaux présentant un coût réduit et donc de qualité inférieure aux matériaux, notamment les fibres, utilisés antérieurement. Or, le recours à des fibres de moins bonne qualité, en général des fibres obtenues à partir de papiers recyclés, a pour inconvénient de conduire à un papier de parement plus sombre et moins homogène dans sa masse et dans sa teinte générale. La réduction du coût du papier de base si elle conduit effectivement à une réduction sensible du coût de la plaque de plâtre, a néanmoins pour conséquence négative de conduire à l'obtention d'un papier présentant une apparence visuelle externe plus sombre et moins homogène. En définitive le panneau de plâtre obtenu présente donc des qualités esthétiques diminuées.

Il a également été envisagé de redonner de la blancheur au papier de moins bonne qualité obtenu, en augmentant la proportion d'agent blanchissant dans la sauce de couchage du papier. Une telle adjonction, outre que son intérêt économique est discutable, n'est pas directement envisageable car elle s'accompagne d'une diminution de la porosité du papier couché, ce qui a tendance à réduire l'évaporation de l'eau lors de la prise du plâtre. Par conséquent, ceci augmente le temps de séchage, ce qui réduit d'autant la productivité de la fabrication et ne rend donc pas acceptable cette solution.

Par ailleurs, la diminution des propriétés de séchage du papier, c'est-à-dire l'augmentation de la valeur de la porosité Gurley (NF ISO 5636-5) du papier, se traduit également par des risques de décollement du papier lorsque la plaque de plâtre a été fabriquée ou par l'apparition de cloques.

### EXPOSE DE L'INVENTION

Les buts assignés à l'invention visent par conséquent à remédier aux différents inconvénients énumérés précédemment et à proposer une nouvelle plaque de plâtre ainsi qu'une nouvelle sauce de couchage et un nouveau procédé de fabrication d'une plaque de plâtre qui, tout en étant d'un coût de fabrication réduit, présente d'excellentes propriétés de finition et d'apparence visuelle, notamment de blancheur, tout en étant facile à fabriquer et conservant dans le temps son intégrité.

Un autre objet de l'invention vise à fournir une nouvelle plaque de plâtre et un nouveau procédé de fabrication afférant, ainsi qu'une nouvelle sauce de couchage qui permettent d'obtenir un effet visuel particulièrement homogène de cette plaque et de manière efficace.

Les objets assignés à l'invention sont atteints à l'aide d'une plaque de plâtre comportant au moins un papier de parement formant l'extérieur de la plaque, et une sauce de couchage déposée sur ledit papier de parement caractérisée en ce que la sauce de couchage comprend des pigments plastiques en tant qu'agent blanchissant.

Les objets assignés à l'invention sont également atteints à l'aide d'une sauce de couchage destinée à être couchée sur la couche supérieure d'un papier de parement d'une plaque de plâtre caractérisée en ce qu'elle comprend des pigments plastiques en tant qu'agent blanchissant.

Les objets assignés à l'invention sont également atteints à l'aide d'un procédé de fabrication d'une plaque de plâtre comportant au moins un papier de parement formant l'extérieur de la plaque dans lequel on dépose une sauce de couchage sur la face supérieure du papier de parement caractérisée en ce qu'on dépose une sauce de couchage comprenant des pigments plastiques en tant qu'agent blanchissant.

Enfin, les objets assignés à l'invention sont atteints à l'aide d'une nouvelle utilisation de pigments plastiques en tant qu'agents de blanchiment dans une sauce de couchage pour papier de parement destiné à une plaque de plâtre.

### MEILLEURE MANIERE DE REALISER L'INVENTION

D'autres objets et avantages de l'invention apparaîtront plus en détails à la lecture de la description qui suit, donnée à titre purement illustratif et non limitatif.

La présente invention a pour objet une plaque de plâtre formée d'un corps ou noyau de plâtre coulé au sein d'une installation appropriée, entre deux armatures extérieures formées, en règle générale, de feuilles de papier ou de cartons assurant ainsi à la fois le parement extérieur de la plaque et son armature support.

De telles plaques de plâtre sont utilisées de manière classique en tant que matériaux de construction et servent à former des cloisons ou des plafonds, ou encore à former des doublages en particulier isolants.

La fabrication de ces plaques est réalisée de manière générale par une suite d'opérations classiques impliquant, tel que cela est bien connu de l'homme du métier, un coulage du plâtre sur l'un des papiers de parement, puis la pose du second papier de parement, puis enfin le séchage de la plaque conduisant à une forte évaporation d'eau et à l'obtention de la plaque définitive de construction après durcissement.

Les étapes générales de la fabrication sont utilement décrites dans le brevet EP-0 521 804 auquel on se référera au besoin.

Dans le cas de la présente invention, la plaque de plâtre conforme à l'invention présente au moins un papier de parement formant l'extérieur de la plaque et de préférence deux papiers de parement disposés de part et d'autre du corps de plâtre.

Le papier de parement utilisé est, de préférence, un papier multicouches pouvant par exemple être formé par un empilement de deux ou plusieurs couches, et en particulier de deux à neuf couches sans que le nombre de couches soit limitatif.

De manière particulièrement avantageuse, le papier de parement d'une plaque de plâtre conforme à l'invention sera formé par une succession de deux couches, étant entendu qu'au sens de l'invention il pourra également être fait usage d'un empilement de trois ou cinq couches sans sortir du cadre de l'invention.

Les caractéristiques du papier, données ci-après à titre nullement limitatif, telles que par exemple son grammage (NFQ03-019), ou encore son épaisseur (NFQ03-016), ses propriétés d'absorption d'eau, qu'il s'agisse de ses propriétés d'absorption d'eau sur la face en contact avec la lame de plâtre ou Cobb trois minutes (NFQ03-014), ou de ses propriétés d'absorption d'eau sur la face extérieure ou Cobb trois minutes (NFQ03-014), sa perméabilité à l'air (porosité GURLEY - NFISO-5636-5), sa résistance à la rupture mesurée selon la norme (NFQ03-004), sa résistance inter plis, son allongement sous eau mesuré à une minute à 23°C dans le sens transversal (NFQ03-063), etc. sont adaptées pour résister à la présence et à l'évaporation d'eau ainsi qu'aux diverses opérations de fabrication.

A titre d'exemples non limitatifs, le grammage du papier de base sera compris entre 100 et 250 g/m², et de manière préférentielle, il sera compris entre 160 et 200 g/m², et de manière encore plus préférentielle, il sera compris entre 180 et 200 g/m²

De manière générale, l'obtention d'une plaque de plâtre à coût réduit, comparativement aux plaques habituelles, implique l'utilisation d'un papier de parement d'un coût réduit, ce qui corrélativement implique le recours à des fibres de moins bonne qualité conduisant finalement à un papier de couleur générale plus sombre et par exemple de l'ordre de 50 à 70 ISO (ISO 2469/2470), et par exemple, de l'ordre de 60.

Avantageusement, la couche supérieure du papier de parement destinée à former l'extérieur de la plaque de plâtre, et qui sera donc la face visible de la plaque sera réalisée à partir d'un mélange de fibres recyclées blanchies ou semi-blanchies telles que des rognures blanches ou de papiers de bureau périmés. Les papiers, références et nomenclatures des papiers cités dans le brevet EP-0 521 804, du même demandeur, sont ici pleinement applicables (groupe C et notamment C7 à C9 et C11, C12, C14 à C19).

La couche supérieure peut également être réalisée à partir de papiers de bureau recyclés sans impression ou à partir de papiers journaux. A titre d'information, d'autres fibres ou pulpes utilisables peuvent être des fibres de celluloses vierges blanchies ou semi-blanchies telles que des fibres chimiques-mécaniques, des fibres thermomécaniques ou des fibres chimiques thermomécaniques.

Le grammage de base de la couche supérieure pourra être compris sensiblement dans l'intervalle 20-90 g/m² et de manière préférentielle compris entre 30 à 50 g/m² environ. Bien évidemment, et tel que cela est connu de l'homme du métier, le grammage de la couche supérieure du papier de parement jouera un rôle très important dans l'obtention de la blancheur finale du papier et l'homme du métier adaptera le grammage de la couche supérieure en fonction du grammage et des propriétés des autres couches, ainsi qu'en fonction des propriétés de la sauce de couchage. De manière non limitative, la blancheur de la couche supérieure sera comprise entre 65 à 68 ISO.

La couche du papier qui est en contact avec le plâtre (gypse) sera avantageusement réalisée à partir de vieux cartons gaufrés, ou encore à partir de matières premières de récupération provenant d'un usage domestique et incluant par exemple des emballages de liquide, ou des types de fibres similaires, ou encore un mélange de ces fibres qui peuvent donner à ces couches la solidité et la porosité nécessaires.

La face de parement supérieure ou jet supérieur du papier, qui constitue la face apparente de la plaque de plâtre, est destinée à recevoir une sauce de couchage pour conférer à cette surface des qualités esthétiques supérieures et notamment une qualité ou plusieurs choisies parmi :
- une surface d'une blancheur affirmée et homogène ;
- une surface qui ne jaunit pas à l'usage ou difficilement, notamment en raison de radiations UV ;
- une surface qui évite l'apport ultérieur d'un primaire d'impression ;
- une surface facile à nettoyer ;
- une surface qui permet la pose et surtout la dépose de papier peint sans altération de la couche de papier, et notamment qui permette l'enlèvement successif de plusieurs couches de papier sans altération majeure ;
- une surface qui ne nécessite pas d'être peinte immédiatement après l'installation de la plaque ou du panneau de plâtre.

La sauce de couchage est à même de remplir les objectifs énoncés précédemment sans altérer les qualités et fonctions du papier relatives à son rôle d'armature et d'évacuation de l'eau lors du séchage du plâtre.

La sauce de couchage pourra être déposée avantageusement à un taux d'environ 25 à 30 g/m², son apport étant bien évidemment dépendant du degré de blancheur initiale du papier, plus le papier de base étant blanc plus l'apport de la sauce de couchage pouvant être faible. Le degré de blancheur du papier couché, c'est-à-dire revêtu de la sauce de couchage pourra être avantageusement d'un indice de brillance ISO compris entre 75 et 85 et avantageusement entre 78 et 80.

L'apport de la sauce de couchage sera effectué selon les techniques habituelles utilisées dans le domaine tel que par lame d'air ou par rouleau ou encore par lame ou encore par pulvérisation ou autre, ou encore par combinaison de l'une ou plusieurs de ces techniques bien connues de l'homme du métier et référencées par exemple dans le brevet EP-A-0 521 804.

Selon l'invention, la plaque de plâtre comportant au moins un papier de parement formant l'extérieur de la plaque ainsi qu'une sauce de couchage déposée sur le papier de parement comporte une sauce de couchage qui comprend des pigments plastiques en tant qu'agent blanchissant.

L'apport de pigments plastiques par la sauce de couchage s'est en effet révélé donner ou redonner un bon degré de blancheur au papier de parement, et ce de manière homogène sans que l'on puisse pour autant constater une baisse sensible de la porosité du papier correspondant à une valeur Gurley élevée.

Ceci s'est avéré surprenant car l'utilisation de pigments plastiques dans des sauces de couchage destinées à des papiers de parement pour plaques de plâtres n'étaient pas connue, et on pouvait certainement s'attendre à un effet négatif en matière de porosité du papier.

Or, il s'avère au contraire que l'on peut donner ou redonner de la blancheur au papier de parement et ce même dans des situations où le papier de parement est d'une couleur relativement sombre, car il est possible, sans craindre un effet secondaire significativement négatif en matière de porosité, d'incorporer des taux élevés de pigments plastiques dans la sauce.

Bien évidemment, l'invention concerne également une sauce de couchage en tant que telle comprenant des pigments plastiques en tant qu'agent blanchissant.

Avantageusement, la sauce de couchage selon l'invention et/ou la plaque de plâtre comportant au moins un papier de parement sur lequel est déposée une sauce de couchage sera telle que la sauce de couchage comprend au moins 5% en poids de pigments plastiques.

On considère que des effets industriels intéressants ont été obtenus sensiblement à partir de 5% en poids de pigments plastiques dans la sauce de couchage, même si, en matière d'amélioration de la blancheur papier, un effet peut être obtenu à un taux inférieur.

Avantageusement, la sauce de couchage et la plaque de plâtre comportant le papier de parement sur lequel est déposée la sauce de couchage comprend entre 5 et 40% en poids de pigments plastiques, et de préférence entre 15 et 25% en poids de pigments plastiques.

Tel que mentionné précédemment, la sauce de couchage sera apportée à raison d'environ 10 g/m² à 45 g/m², et de préférence à raison d'environ 20 à 30 g/m², et de manière encore plus préférentielle, à raison de 25 à 30 g/m².

Les pigments plastiques, également appelés pigments organiques par opposition aux pigments inorganiques tels que l'argile, le talc ou le carbonate de calcium par exemple, sont des latex polymériques de synthèse dont le point de transition vitreuse est suffisamment élevé pour donner à ces latex une ou des propriété(s) non filmogène(s) permettant aux particules composant ce type de latex de rester séparées.

Les pigments plastiques ou pigments organiques utilisables dans la sauce de couchage conforme à l'invention pourront être choisis parmi les pigments plastiques disponibles sur le marché, et en particulier parmi les pigments plastiques à particules pleines ou à particules creuses. Avantageusement, les pigments plastiques seront formés de particules creuses c'est-à-dire comportant un volume interne libre.

A titre d'exemple non limitatif, les pigments plastiques utilisés dans la sauce peuvent être des pigments plastiques vendus sous la référence commerciale ROPAQUE (marque déposée) HP-1055 proposés par la société ROHM & HAAS, ou encore par des pigments plastiques correspondant à la référence ROPAQUE (marque déposée) BC - 643 du même fabricant. D'autres composés sont bien évidemment utilisables sans pour autant sortir du cadre général de l'invention.

Les pigments plastiques seront intégrés et mélangés dans une sauce de couchage comprenant en plus des pigments plastiques :
- au moins 25% et plutôt environ au moins 30% de charges, de préférence de carbonate de calcium, et de préférence à environ 44%,
- une quantité d'eau,
- un agent dispersant,
- un agent anti-moussant,
- au moins 8% de liant, (de préférence du styrène-butadiène et de préférence à environ 16%),
- un agent insolubilisant, de préférence une résine époxy-aliphatique,
- un biocide, de préférence en agent organo-sulfuré / azoté.

En tant que charge minérale, il est possible d'utiliser à la place du carbonate de calcium toute charge équivalente tel que par exemple du sulfate de calcium di-hydraté quelle que soit sa forme.

En tant que liant, on pourra utiliser essentiellement des liants synthétiques, et en particulier des latex synthétiques (styrène-butadiène ou styrène-acrylique notamment). Ainsi, à la place du styrène-butadiene ou en combinaison avec, il est bien évidemment envisageable d'utiliser d'autres latex synthétiques et plus généralement, toutes les matières polymères habituellement employées, et par exemple les matières polymères synthétiques tels que les acétates de polyvinyle et les polymères à base de monomères acryliques ainsi que les matières polymères d'origine naturelle, tel que de manière non limitative, les polymères amylacés, modifiés ou non, des protéines du genre caséine ou un mélange de matières polymères synthétiques avec des matières polymères d'origine naturelle.

Avantageusement, la proportion de liants synthétiques pourra être significativement augmentée dans la sauce de couchage comparativement aux sauces connues de l'art antérieur.

Ainsi, la plaque de plâtre selon l'invention comportera un liant formé par un latex synthétique ou une combinaison de latex synthétiques, le ou les liants étant incorporé(s) dans la sauce de manière préférentielle, à raison d'au moins 10% et de préférence au moins 12% en poids.

Avantageusement, le ou les latex synthétiques sont incorporés à raison d'au moins 15% en poids dans la sauce de couchage.

Enfin, le liant sera avantageusement du styrène-butadiène apporté à raison d'environ 15 à 16% en poids dans la sauce (tableau 2).

Cet apport, significativement plus élevé que les taux d'apport classiques améliore la résistance du papier couché au ponçage et donc de la plaque de plâtre sans que, de manière surprenante, on constate, comme on aurait pu s'y attendre, une fermeture correspondante du papier conduisant à un allongement du temps de séchage. Par ailleurs, la tenue des enduits de jointoiement sur les plaques de plâtres comportant un papier couché avec une sauce de couchage comportant une proportion aussi élevée de latex, n'est pas affectée et au moins comparable à la tenue sur des plaques connues.

En plus des composants indiqués précédemment, la sauce de couchage pourra comprendre des composants secondaires présents ou non dans la sauce.

A ce titre, la sauce peut comprendre en outre, du dioxyde de titane, agissant en tant que charge, à raison de 10% en poids.

La sauce pourra également comprend un agent de pH, et par exemple de l'hydroxyde de sodium, par exemple à raison de moins de 1 % en poids de la sauce.

La sauce de couchage pourra comprendre également en tant que fluidifiant, de l'ammonium. L'ammonium peut être apporté à un taux très faible.

Enfin, la sauce peut comprendre en outre de l'amidon de maïs oxydé agissant en tant que liant, en complément du styrène-butadiene de préférence à raison d'environ 15% en poids.

### Exemple 1 de réalisation

Le tableau 2 ci-après donne un exemple de réalisation pratique d'une sauce de couchage conforme à l'invention.

Les valeurs de la colonne 9 relatives aux « parts » expriment la composition de la sauce tel que cela est classiquement utilisé dans le domaine, en tant que pourcentage de la matière sèche du composant en fonction de la valeur de la matière sèche du pigment, dont la référence est donnée comme étant égale à 100.

Dans le cas où il y a plusieurs types de pigments dans la sauce, la somme de leurs valeurs relatives est également indiquée comme étant la référence 100 et la valeur des autres composants de la sauce est calculée en fonction.

Dans le cas présent, le pigment plastique représente donc 20% de l'extrait sec de l'ensemble des trois charges utilisées qui est au total de 193,769 kgs (somme de la matière sèche de l'ensemble des charges de la composition) ce qui correspond à environ 13% en poids de pigments plastiques rapporté à l'ensemble de la formulation sèche.

En tant que charge, la sauce comprend environ 44% de carbonate de calcium et environ 16% de styrène-butadiène en tant que liant.

Le pigment plastique (Ropaque HP-1055) est composé de pigments polymérique de styrène acrylique avec des particules de l'ordre de 1,0 micromètres de diamètre avec 55% de volume vide.

La sauce a été déposée par un système de lame d'air après addition d'une quantité supplémentaire d'eau pour diminuer la viscosité de la sauce, et par exemple de l'ordre de 80 litres sur un papier de parement présentant les caractéristiques figurant au tableau 1 ci-après.

Le dépôt a été fait à raison d'environ 29 g/m².

Les valeurs figurant dans le tableau 1 sont obtenues selon les normes en vigueur à savoir :
- porosité :(valeur Gurley) NF ISO 5636-5,
- Cobb : *ISO 535,*
- test de Dennison : *TAPPI 459*,
- mesures de couleur : selon la norme T527 OM94 (TAPPI), le système de couleur étant exprimé selon le système CIE L*, a*, b*.

L'étude des résultats montre que les indices de couleur mesurés du papier couché se sont significativement élevés, alors que la porosité du papier est restée dans des valeurs acceptables puisque la porosité (valeur Gurley) du papier est passée de 67,4 s/100 ml (papier non couché) à 137,8 s/100 ml (papier couché).

La valeur initiale de blancheur du papier qui était de 84,27 (la valeur 0 correspond au noir et la valeur 100 au blanc parfait) est passée quant à elle à 89,23.

Les autres valeurs représentatives de la mesure de couleur a* pour le gris et b* pour le bleu se sont également nettement améliorées.

Il s'avère par conséquent que l'incorporation dans la sauce de couchage d'un agent blanchissant à base de pigments plastiques et l'application de cette sauce sur un papier de base spécifiquement conçu pour une plaque de plâtre et obtenu avec des fibres de moins bonnes qualités, par exemple des fibres recyclées non blanchies, permet de donner, de façon efficace et bon marché, un bon degré de blancheur au papier de parement d'une plaque de plâtre. Cet apport peut s'effectuer sans craindre un effet secondaire négatif sur la qualité du papier, notamment ses qualités et propriétés de porosité et ce, même à des quantités d'apport élevées qui peuvent être nécessaires dans le cas de papiers de base particulièrement sombres. Il est donc non seulement possible de redonner de la blancheur au papier de parement, mais encore de le faire de manière efficace.

### Exemple 2 (Tableau 3)

Cet exemple ne diffère pratiquement pas de l'exemple 1, la composition de la sauce de couchage étant inchangée, seuls certains noms commerciaux de produits ayant changé et provenant de fournisseurs différents (et donc de références différentes) pour le carbonate de calcium, le liant (amidon oxidisé de maïs). Les autres conditions sont sensiblement inchangées par rapport à l'exemple 1.

Les résultats figurant au tableau 5 pour cet exemple 2 montrent également une élévation significative de la blancheur du papier après couchage et de la plaque de plâtre. Le papier utilisé présente un grammage de 195 g/m² et la sauce a été déposée à raison de 30g/m² selon la procédure déjà décrite.

### Exemple 3 (Tableau 4)

Pour l'essentiel, la composition de la sauce de couchage est similaire à celle des exemples 1 et 2, sauf pour la teneur en liant, puisque l'amidon oxidisé de maïs a été omis ainsi que le composant associé, savoir l'hydroxide de sodium (fluidifiant) dont les proportions étaient réduites. Les proportions des autres composants sont restées sensiblement identiques dans cette sauce de couchage.

Cette sauce a été couchée à raison de 23 g/m² selon la procédure déjà décrite sur un papier de base de grammage de l'ordre de 195 g/m². L'apport de pigments plastiques contribue à l'augmentation significative de la blancheur du papier tel que montré au Tableau 5.

Enfin, les résultats figurant au tableau 5 sont également intéressants dans leur caractère comparatif entre les exemples 2 et 3 car les mesures effectuées proviennent de lots de papiers identiques et de plaques de plâtres identiques sur lesquels les sauces de couchages des exemples 2 et 3 ont été couchées. On remarque alors l'effet régulateur de l'amidon oxidisé de maïs sur la blancheur du papier, cet effet de régulation étant même particulièrement net sur la brillance du papier couché.

### Exemple 4 (Tableau 6)

Dans cet exemple, on a fortement réduit l'apport de pigments plastiques qui ne représentent que 4,15% (5 parts) en poids de la de sauce. Malgré ce niveau d'apport réduit, on peut constater (Tableau 7) l'élévation significative de la blancheur du papier couché et de la plaque de plâtre obtenue marquant ainsi, l'effet prépondérant des pigments plastiques. La forte réduction de la teneur en pigments plastiques explique également la faible valeur de brillance en relation avec la forte teneur en charges.

### Essais d'aptitude à la peinture

Il a également été procédé à des essais d'applications de peinture sur le papier couché à l'aide d'une peinture acrylique type « FASTOATIN » de la société TOLLENS.

L'application de la peinture s'est révélée être particulièrement facile et le taux de couverture très bon. Après séchage, la zone ayant subi l'application est sensiblement plus blanche que le papier de parement de la plaque, le résultat général étant excellent. Aucun problème particulier pour le passage de la seconde couche n'a été noté, les résultats étant toujours excellents.

### Essais de décollement et d'enlèvement de papiers peints

Il a également été procédé à des essais ayant pour but d'évaluer la résistance et le maintien de l'intégrité du papier de parement lors de l'enlèvement et du décollement de papiers peints.

Le papier utilisé était un papier peint classique de CASTORAMA.

Tensio actif : PERFAX de HENKEL.

Dilution du produit : 40 ml pour 4 l d'eau.

La colle utilisée était une colle « *Métylan* » (marque déposée) normale de HENKEL.

Le premier essai de décollement et d'arrachement du papier fait paraître que le tensio actif avait tendance à agir rapidement sur la plaque de plâtre.

Il est également possible d'agir en pulvérisant le tensio actif.

Dans tous les cas, il s'avère quasiment impossible d'abîmer ou d'endommager le papier de parement de la plaque de plâtre.

Après un premier enlèvement de papier peint, il a été procédé, selon les mêmes conditions que la première opération, au collage d'une seconde couche de papier peint.

L'arrachement de cette seconde couche n'a également pas posé de problème particulier, le papier de parement réagissant toujours très bien et rapidement au tensio actif, de telle manière qu'il était toujours possible de retirer cette seconde couche de papier extrêmement facilement. Les deux seules zones de dégradation du papier de parement ont été causées par le dommage créé par le couteau d'arrachement utilisé pour l'opération.

### Essais de résistance au ponçage

Des essais de résistance mécanique du papier de parement au ponçage ont été réalisés sur des plaques de plâtre classiques formant témoin et sur des plaques de plâtre pourvues d'un papier de parement conforme à l'invention et sur lequel a été déposée une sauce de couchage conforme à l'invention.

Les résultats montrent que les deux plaques plâtres ont perdu sensiblement le même poids par érosion mécanique, soit environ 0,2 g. Par ailleurs, leur comportement est sensiblement identique.

L'ensemble de ces essais montre bien, outre la bonne blancheur obtenue avec l'utilisation de pigments plastiques, que les propriétés mécaniques de résistance générale du papier sont conservées.

L'invention concerne également un procédé de fabrication d'une plaque de plâtre comportant au moins un papier de parement formant l'extérieur de la plaque dans lequel on dépose une sauce de couchage sur la face supérieure du papier de parement.

Le procédé de fabrication selon l'invention est caractérisé en ce que l'on dépose une sauce de couchage comprenant des pigments plastiques en tant qu'agent blanchissant.

Avantageusement, la sauce de couchage comprend au moins 5% en poids de pigments plastiques.

De manière préférentielle, le procédé de fabrication selon l'invention est caractérisé en ce que la sauce de couchage apportée comprend entre 5 et 40% en poids de pigments plastiques, et de préférence entre 15 et 25% en poids de pigments.

De manière avantageuse, on assure l'apport de la sauce de couchage à raison de 10 à 45 g/m², de préférence à raison de 20 à 30 g/m² environ, et de manière encore plus préférentielle à raison de 25 à 30 g/m².

De manière encore plus préférentielle, on assure un apport de sauce de couchage de l'ordre de 29 g/m² environ.

L'apport de la sauce de couchage est assuré selon l'une des techniques mentionnées précédemment.

Selon le procédé de l'invention, le liant est formé par un latex synthétique ou une combinaison de latex synthétiques, le ou les liants étant incorporé(s) dans la sauce à raison d'au moins 12% en poids.

Selon le procédé de l'invention, le ou les latex synthétiques sont incorporés à raison d'au moins 15% en poids dans la sauce de couchage, le liant étant de préférence du styrène-butadiène.

Au sens de l'invention, l'expression « *procédé de fabrication d'une plaque de plâtre »* comprend non seulement les étapes de fabrication industrielle de la plaque de plâtre, essentiellement de coulage du plâtre au sein de son armature et le séchage de la plaque, mais encore les étapes antérieures de fabrication de l'armature correspondant à la fabrication du ou des papier(s) de parement.

L'apport de la sauce de couchage peut donc intervenir indifféremment au cours de l'une quelconques de ces étapes.

Le procédé de fabrication selon l'invention est enfin caractérisé en ce qu'on assure l'apport de la sauce de couchage avant l'opération de coulage du noyau de plâtre ou après la formation de la plaque de plâtre.

Avant le coulage du plâtre, le papier peut être couché avec la sauce sur la même ligne de fabrication ou sur une autre ligne de fabrication complètement indépendante, voire dans une autre unité de fabrication où le papier est fabriqué.

Le couchage du papier peut ainsi intervenir dès le stade de fabrication du papier, bien avant le procédé d'assemblage proprement dit de la plaque de plâtre, incluant le coulage du plâtre.

L'opération de couchage peut en effet intervenir sur le support de papier assurant le maintien mécanique de la plaque de plâtre avant ou sensiblement pendant le coulage du noyau de plâtre à base de gypse et donc avant le séchage industriel de la plaque. L'apport de la sauce peut également intervenir après l'opération de coulage, une fois la plaque formée avant le séchage industriel ou même après le séchage industriel, mais au cours du procédé industriel de fabrication.

Enfin, la présente invention concerne une nouvelle utilisation de pigments plastiques en tant qu'agents de blanchiment dans une sauce de couchage pour papier de parement destiné à une plaque de plâtre. Il n'était en effet pas connu d'utiliser de tels pigments dans des sauces de couchage pour l'application spécifique visée, à savoir le dépôt sur des papiers utilisés lors de la fabrication de plaques de plâtre.

### POSSIBLITE D'APPLICATION INDUSTRIELLE

L'invention trouve son application industrielle dans la fabrication de plaques de plâtre comportant au moins un papier de parement, dans la fabrication de sauces de couchage destinées à être couchées sur les papiers de parement, dans les procédés de fabrication de plaques de plâtre comportant au moins un papier de parement et dans l'utilisation de pigments plastiques en tant qu'agents de blanchiment dans une sauce de couchage pour papier de parement dans une plaque de plâtre.

**TABLEAU 1**

| **Ambiance de l'essai** : 23°C/50%RH | | | | | |
|---|---|---|---|---|---|
| **Type de papier** : Papier couché avec sauce de couchage selon l'invention | | | | | |
| | | **Papier non couché** | **Papier couché** | **Plaque de plâtre** | **Plaque de plâtre** |
| | | | | **Usine 1** | **Usine 2** |
| **Aptitude à être peint** | | | | | Bon |
| **Détapissage** | **deux fois** | | | | Bon |
| **Résistance au ponçage** | **forte** | | | 0.2g | 0.2g |
| **Colorimétrie** | **L** | 84.27 | 89.23 | 88.17 | |
| | **a*** | 0.60 | 0.00 | -0.15 | |
| | **b*** | 2.35 | 1.65 | 4.28 | |
| | **YI** | 5.47 | 3.33 | 8.48 | |
| **Brillance** | **angle de 85°** | 2.8 | 6.9 | 7.1 | 6.4 |
| **Grammage** | **g/m²** | 192.0 | 221.0 | | |
| **Densité** | **Kg/m³** | 711.0 | 762.0 | | |
| **Porosité** | **sec/100ml** | 67.4 | 137.8 | | |
| **Cobb (60)** | **top** | 32 | 14 | | 6 |
| **Test de la cire de Dennison** | **top** | 17 | 15 | | 13 |

**TABLEAU 2**

| **Exemple 1 de réalisation d'une composition de la sauce de couchage** | | | | | | | | | |
|---|---|---|---|---|---|---|---|---|---|
| **Moitié de mélange** | **Nom des agents** | **Composition chimique** | **Fonction** | **Forme** | **MS %** | **Poids (kg) des matières sèches** | **Poids total MS+fraction liquide** | **Parts** | **%** |
| **1** | Eau | Eau | | Liquide | | | 80 | | |
| **2** | EW902 | Carbonate de calcium | Charge | Dispersion | 75 | 126.0 | 168 | 65.03 | 43.94 |
| **3** | Dispex N-40 | | Agent dispersant | Liquide | 40 | 0.48 | 1.2 | 0.25 | 0.16 ' |
| **4** | Titanium Dioxide | Dioxyde de Titanium | Charge | Poudre | 99 | 29.0 | 29.3 | 14.97 | 10.11 |
| **5** | Etingal S | Ester de phosphore | Anti moussant | Liquide | 100 | 0.3 | 0.3 | 0.15 | 0.10 |
| **6** | NaOH | Hydroxyde de sodium | Agent de pH | Poudre | 100 | 2.60 | 2.60 | 1.34 | 0.90 |
| **7** | Ropaque | Pigment plastique | Charge | Liquide | 28.5 | 38.76 | 136 | 20.00 | 13.51 |
| **8** | Ammonia | Ammonium | Fluidifiant | Liquide | 20 | 0.01 | 0.07 | 0.01 | 0.003 |
| **9** | Amilys 108P | Amidon oxydisé de maïs | Liant | Poudre | 86 | 43.0 | 50.0 | 22.19 | 14.99 |
| **10** | Latexia305 | Styrène-butadiène | Liant | Liquide | 50 | 45 | 90 | 23.22 | 15.69 |
| **11** | Basocoll OV | Résine epoxy aliphatique | Insolubilisant/Agent de réticulation | Liquide | 100 | 0.80 | 0.80 | 0.41 | 0.27 |
| **12** | Surfasept 440 | Azote/Sulfure organiq | Biocide | Liquide | 45 | 0.77 | 1.70 | 0.40 | 0.26 |
| **Total** | | | | | | 286.7 | 560.0 | 148.0 | 99.933 |
| **MS** | | | | | | | 640.0 | 44.8 | |

**TABLEAU 3**

| **Exemple 2 : Composition de la sauce de couchage** | | | | | | | | | | |
|---|---|---|---|---|---|---|---|---|---|---|
| | **Nom des agents** | **Composition chimique** | **Fonction** | **Fournisseur** | **Forme** | **MS %** | **Poids (kg) des matières sèches** | **Poids total MS+fraction liquide** | **Parts** | **%** |
| **1** | Eau | Eau | | | Liquide | | | 140 | | |
| **2** | Carbital 90-P | Carbonate de calcium | Charge | AGS-BMP | Dispersion | 75 | 252,0 | 336 | 65,03 | 43,939 |
| **3** | Dispex N-40 | | Agent dispersant | | Liquide | 40 | 0,96 | 2,4 | 0,25 | 0,169 |
| **4** | Titanium Dioxide | Dioxyde de Titanium | Charge | | Poudre | 99 | 58,0 | 58,6 | 14,97 | 10,115 |
| **5** | Etingal S | Ester de phosphore | Anti moussant | BASF | Liquide | 100 | 0,6 | 0,6 | 0,15 | 0,101 |
| **6** | NaOH | Hydroxyde de sodium | Fluidifiant / Agent de PH | ENI Chem | Poudre | 100 | 5,20 | 5,20 | 1,34 | 0,905 |
| **7** | Ropaque | Pigment plastique | Charge | Rohm & Haas | Liquide | 28,5 | 77,52 | 272 | 20,00 | 13,513 |
| **8** | Ammonia | Ammonium | Fluidifiant | Langlois Chemie | Liquide | 20 | 0,03 | 0,14 | 0,01 | 0,007 |
| **9** | Stabilys DO29 | Amidon oxydisé de maïs | Liant | Roquette | Poudre | 86 | 86,0 | 100,0 | 22,19 | 14,993 |
| **10** | Latexia 305 | Styrène-butadiène | Liant | Latexia | Liquide | 50 | 90 | 180 | 23,22 | 15,689 |
| **11** | Basocoll OV | Résine epoxy aliphatique | Insolubilisant/Agent de réticulation | BASF | Liquide | 100 | 1,60 | 1,60 | 0,41 | 0,277 |
| **12** | Surfasept440 | Azote/Sulfure organique | Biocide | Nalco | Liquide | 45 | 1,53 | 3,40 | 0,39 | 0,263 |
| **Total** | | | | | | | 573,5 | 1099,9 | 148,0 | 100,000 |
| **MS** | | | | | | | | 1239,0 | 46,3 | |

**TABLEAU 4**

| **Exemple 3 : Composition de la sauce de couchage** | | | | | | | | | | |
|---|---|---|---|---|---|---|---|---|---|---|
| **Moitié de mélange** | **Nom des agents** | **Composition chimique** | **Fonction** | **Fournisseur** | **Forme** | **MS %** | **Poids (kg) des matières sèches** | **Poids total MS+fraction liquide** | **Parts** | **%** |
| **1** | Eau | Eau | | | Liquide | Liquide | | 50 | | |
| **2** | Carbital 90-P | Carbonate de calcium | Charge | AGS-BMP | Dispersion | 75 | 126,0 | 168 | 65,03 | 52,233 |
| **3** | Dispex N-40 | | Agent dispersant | | Liquide | 40 | 0,48 | 1,2 | 0,25 | 0,201 |
| **4** | Titanium Dioxide | Dioxyde de Titanium | Charge | | Poudre | 99 | 29,0 | 29,3 | 14,97 | 12,024 |
| **5** | Etingal S | Ester de phosphore | Anti moussant | BASF | Liquide | 100 | 0,3 | 0,3 | 0,15 | 0,120 |
| **6** | NaOH | Hydroxyde de sodium | Fluidifiant | ENI Chem | Poudre | 100 | 0,15 | 0,15 | 0,08 | 0,064 |
| **7** | Ropaque | Pigment plastique | Charge | Rohm & Haas | Liquide | 28,5 | 38,76 | 136 | 20,00 | 16,064 |
| **8** | Ammonia | Ammonium | Fluidifiant | Langlois Chemie | Liquide | 20 | 0,01 | 0,07 | 0,01 | 0,008 |
| **9** | Latexia 305 | Styrène-butadiène | Liant | Latexia | Liquide | 50 | 45 | 90 | 23,22 | 18,651 |
| **10** | Basocoll OV | Résine epoxy aliphatique | Insolubilisant/Agent de réticulation | BASF | Liquide | 100 | 0,80 | 0,80 | 0,41 | 0,329 |
| **11** | Surfasept 440 | Azote/Sulfure organique | Biocide | Nalco | Liquide | 45 | 0,77 | 1,70 | 0,39 | 0,313 |
| **Total** | | | | | | | 241,3 | 477,5 | 124,5 | 100,000 |
| **MS** | | | | | | | | 527,5 | 45,7 | |

**TABLEAU 5**

| | | | **Exemple 2** | **Exemple 2** | **Exemple 3** | **Exemple 2** | **Exemple 3** |
|---|---|---|---|---|---|---|---|
| | | | **Papier de base** | **Papier couché** | **Papier couché** | **Plaque de plâtre** | **Plaque de plâtre** |
| Adhésion du joint | | | | | | Bon | Très bon |
| Aptitude à être peint | | | | | | Bon | Faible |
| Détapissage | | deux fois | | | | Bon | Bon |
| Résistance au ponçage | | bonne / pauvre | | | | Bon | Moyen |
| Colorimétrie | | L | 82,39 | 87,96 | 91,73 | 88,49 | 90,96 |
| | | a* | 1,14 | 0,23 | -0,11 | -0,10 | -0,23 |
| | | b* | 0,71 | 0,08 | 0,08 | 3,42 | 1,25 |
| | | YI | 2,52 | 0,36 | 0,07 | 6,81 | 2,29 |
| Brillance | | Angle de 85° | 4,80 | 12,20 | 29,30 | 8,40 | 41,90 |
| Blancheur après avoir peint une fois | | L | | | | 94,66 | 94,55 |
| Test UV 12 heures | | L | | | | 88,25 | 90,91 |
| | | YI | 4,29 | 2,00 | 0,89 | 7,63 | 2,93 |
| Porosité | | sec/100 ml | 61,6 - 63,9 | 262,5 - 227 | 248 - 203 | | |
| Cobb (60) | 1 minute | Top | 20-21-20 | 10-9,5-9 | 4-4-3 | 4-6-6 | 2-3-3 |
| Test de la goutte | | min/sec | | | | 2h | > 2h 30 |
| Test de la cire de Dennison | | Top | 19 | 15 | <8 | 13 | 15 |

**TABLEAU 6**

| **Exemple 4 : Composition de la sauce de couchage** | | | | | | | | | | |
|---|---|---|---|---|---|---|---|---|---|---|
| | **Nom des agents** | **Composition chimique** | **Fonction** | **Fournisseur** | **Forme** | **MS %** | **Poids (kg) des matières sèches** | **Poids total MS+fraction liquide** | **Parts** | **%** |
| **1** | Eau | Eau | | | Liquide | | | 50 | | |
| **2** | Dispex N-40 | | Agent dispersant | | Liquide | 40 | 0,8 | 2 | 0,41 | 0,340 |
| **3** | Carbital 90-P | Carbonate de calcium | Charge | Minerys | Liquide | 75 | 39 | 52 | 20,14 | 16,686 |
| **4** | Durcal 10 | Carbonate de calcium | Charge | OMYA | Poudre | 100 | 116,0 | 116 | 59,89 | 49,619 |
| **5** | Titanium Dioxide | Ester de phosphore | Charge | | Poudre | 99 | 29,0 | 29,3 | 14,97 | 12,403 |
| **6** | Etingal S | Ester de phosphore | Anti moussant | BASF | Liquide | 100 | 0,3 | 0,3 | 0,15 | 0,124 |
| **7** | NaOH | Hydroxyde de sodium | Fluidifiant | ENI Chem | Poudre | 100 | 0,20 | 0,20 | 0,10 | 0,083 |
| **8** | Ropaque | Pigment plastique | Charge | Rohm & Haas | Liquide | 28,5 | 9,69 | 34 | 5,00 | 4,142 |
| **9** | Ammonia | Ammonium | Fluidifiant | Langlois Chemie | Liquide | 20 | 0,02 | 0,1 | 0,01 | 0,008 |
| **10** | Soya Protein | Protéine de soja | Agent de réticulation | Du Pont | Poudre | 90 | 7,74 | 8,6 | 4,00 | 3,314 |
| **11** | Water | Eau | | | Liquide | | | 40,0 | | |
| **12** | Latexia 305 | Styrène-butadiène | Charge | Latexia | Liquide | 50 | 29 | 58 | 14,97 | 12,403 |
| **13** | Basocoll OV | Résine epoxy aliphatique | Insolubilisant/Agent de réticulation | BASF | Liquide | 100 | 1,10 | 1,10 | 0,57 | 0,472 |
| **14** | Surfasept 440 | Azote/Sulfure organique | Biocide | Nalco | Liquide | 45 | 0,77 | 1,70 | 0,39 | 0,323 |
| **15** | Silicone RE 29 | Polysiloxane | Agent hydrophobe | Witco | Liquide | 43 | 0,19 | 0,45 | 0,10 | 0,083 |
| **Total** | | | | | | | 233,8 | 393,8 | 120,7 | 100,000 |
| **MS** | | | | | | | | 423,8 | 55,2 | |

**TABLEAU 7**

| **Exemple 4** | | | | | |
|---|---|---|---|---|---|
| | | | Papier de base | Papier couché | Plaques |
| Aptitude à être peint | | | | | Bon |
| Résistance au ponçage | | Bon / faible | | Bon | Bon |
| Colorimétrie | | L | 84,86 | 88,35 | 88,03 |
| | | a* | 0,47 | -0,10 | -0,36 |
| | | b* | 0,13 | 0,40 | 4,12 |
| | | YI | 0,67 | 0,73 | 8,00 |
| Brillance | | Angle de 85° | 4,3 | 1,8 | 2,6 |
| Test UV 12 heures | Couleurs | L | | 88,22 | 87,88 |
| | | a* | | -0,25 | -0,57 |
| | | b* | | 1,24 | 4,97 |
| | | YI | | 2,33 | 9,52 |
| Poids de base | | gsm | 199 | 232 | |
| Densité | | kg/m3 | 743 | 787,0 | |
| Porosité | | sec/100 ml | 178 | >1999 | |
| | | | 26/ | 3,5/ | 11,51 |
| Cobb (60) | 1 minute | Top | 25,6/ | 3,5/ | 13,4/ |
| | | | 25,8 | 5,2 | 11,9 |
| Test de la cire de Dennison | | Top | 19 | 13 | 13 |

## Revendications

1. Plaque de plâtre comportant au moins un papier de parement formant l'extérieur de la plaque et une sauce de couchage déposée sur ledit papier de parement, **caractérisée en ce que** la sauce de couchage comprend des pigments plastiques en tant qu'agent de blanchiment.

2. Plaque de plâtre selon la revendication 1 **caractérisée en ce que** la sauce de couchage comprend au moins 5% en poids de pigments plastiques.

3. Plaque de plâtre selon la revendication 2 **caractérisée en ce que** la sauce de couchage comprend entre 5% et 40% en poids de pigments plastiques, et de préférence entre 15 et 25% en poids de pigments plastiques.

4. Plaque de plâtre selon la revendication 3 **caractérisée en ce que** la sauce comprend environ 13% en poids de pigments plastiques.

5. Plaque de plâtre selon l'une des revendications 1 à 4 **caractérisée en ce que** la sauce est apportée à raison d'environ 10 à 45 g/m², et de préférence à raison d'environ 20 à 30 g/m².

6. Plaque de plâtre selon l'une des revendications précédentes **caractérisée en ce que** les pigments plastiques sont choisis parmi les pigments plastiques à particules pleines ou à particules creuses.

7. Plaque de plâtre selon l'une des revendications précédentes **caractérisée en ce que** la sauce comprend, en plus des pigments plastiques :
- au moins 25% de charges, de préférence du carbonate de calcium, et de préférence à environ 44% ;
- une quantité suffisante d'eau ;
- un agent dispersant ;
- un agent anti-moussant ;
- au moins 8% de liant,
- un agent insolubilisant, de préférence une résine époxy aliphatique ;
- un biocide, de préférence un agent organo-sulfuré/azoté.

8. Plaque de plâtre selon la revendication 7 **caractérisée en ce que** le liant est formé par un latex synthétique ou une combinaison de latex synthétiques, le ou les liants étant incorporé(s) dans la sauce à raison d'au moins 10% et de préférence au moins 12% en poids.

9. Plaque de plâtre selon la revendication 8 **caractérisée en ce que** le ou les latex synthétiques sont incorporés à raison d'au moins 15% en poids dans la sauce de couchage

10. Plaque de plâtre selon la revendication 8 ou 9 **caractérisée en ce que** le liant est du styrène-butadiène.

11. Plaque de plâtre selon l'une des revendications 7 à 10 **caractérisée en ce que** la sauce comprend en outre du dioxyde de titane à raison d'environ 10% en poids.

12. Plaque de plâtre selon l'une des revendications 7 à 11 **caractérisée en ce que** la sauce comprend en outre de l'hydroxyde de sodium.

13. Plaque de plâtre selon l'une des revendications 7 à 12 **caractérisée en ce que** la sauce comprend en outre de l'ammonium.

14. Plaque de plâtre selon l'une des revendications 7 à 13 **caractérisée en ce que** la sauce comprend en outre de l'amidon de maïs oxydé, de préférence à raison d'environ 15% en poids.

15. Sauce de couchage destinée à être couchée sur la couche supérieure d'un papier de parement d'une plaque de plâtre **caractérisée en ce qu'**elle comprend des pigments plastiques en tant qu'agent de blanchiment.

16. Sauce de couchage selon la revendication 15 **caractérisée en ce que** la sauce de couchage comprend au moins 5% en poids de pigments plastiques.

17. Sauce de couchage selon la revendication 16 **caractérisée en ce que** la sauce de couchage comprend entre 5% et 40% en poids de pigments plastiques, et de préférence entre 15 et 25% en poids de pigments plastiques.

18. Sauce de couchage selon la revendication 17 **caractérisée en ce que** la sauce comprend environ 13% en poids de pigments plastiques.

19. Sauce de couchage selon l'une des revendications 15 à 18 **caractérisée en ce que** les pigments plastiques sont choisis parmi les pigments plastiques à particules pleines ou à particules creuses.

20. Sauce de couchage selon l'une des revendications 15 à 19 **caractérisée en ce que** la sauce comprend, en plus des pigments plastiques :
- au moins 25% de charges, de préférence du carbonate de calcium, et de préférence environ 44% ;
- une quantité suffisante d'eau ;
- un agent dispersant ;
- un agent anti-moussant ;
- au moins 8% de liant
- un agent insolubilisant, de préférence une résine époxy aliphatique ;
- un biocide, de préférence un agent organo-sulfuré/azoté.

21. Sauce de couchage selon la revendication 20 **caractérisée en ce que** le liant est formé par un latex synthétique ou une combinaison de latex synthétiques, le ou les liants étant incorporé(s) dans la sauce à raison d'au moins 10% en poids et de préférence au moins 12%.

22. Sauce de couchage selon la revendication 21 **caractérisée en ce que** le ou les latex synthétiques sont incorporés à raison d'au moins 15% en poids dans la sauce de couchage

23. Sauce de couchage selon la revendication 21 ou 22 **caractérisée en ce que** le liant est du styrène-butadiène.

24. Sauce de couchage selon l'une des revendications 20 à 23 **caractérisée en ce que** la sauce comprend en outre du dioxyde de titane à raison d'environ 10% en poids.

25. Sauce de couchage selon l'une des revendications 20 à 24 **caractérisée en ce que** la sauce comprend en outre de l'hydroxyde de sodium.

26. Sauce de couchage selon l'une des revendications 20 à 25 **caractérisée en ce que** la sauce comprend en outre de l'ammonium.

27. Sauce de couchage selon l'une des revendications 20 à 26 **caractérisée en ce que** la sauce comprend en outre de l'amidon de maïs oxydé, de préférence à raison d'environ 15% en poids.

28. Procédé de fabrication d'une plaque de plâtre comportant au moins un papier de parement formant l'extérieur de la plaque dans lequel on dépose une sauce de couchage sur la face supérieure du papier de parement **caractérisé en ce qu'**on dépose une sauce de couchage comprenant des pigments plastiques en tant qu'agent de blanchiment.

29. Procédé de fabrication selon la revendication 28 **caractérisé en ce que** la sauce de couchage comprend au moins 5% en poids de pigments plastiques.

30. Procédé de fabrication selon la revendication 29 **caractérisé en ce que** la sauce de couchage comprend entre 5% et 40% en poids de pigments plastiques, et de préférence entre 15 et 25% en poids de pigments plastiques.

31. Procédé de fabrication selon l'une des revendications 28 à 30 **caractérisé en ce qu'**on assure l'apport de la sauce de couchage à raison de 10 à 45 g/m², de préférence à raison de 20 à 30 g/m² environ.

32. Procédé de fabrication selon l'une des revendications 28 à 31 **caractérisé en ce qu'**on assure l'apport de la sauce de couchage avant l'opération de coulage du noyau de plâtre ou après la formation de la plaque de plâtre.

33. Procédé selon la revendication 32 **caractérisé en ce que** le couchage du papier intervient dès le stade de fabrication du papier.

34. Utilisation de pigments plastiques en tant qu'agent de blanchiment dans une sauce de couchage pour papier de parement destiné à une plaque de plâtre.

## Claims

1. Plasterboard comprising at least one facing paper forming the exterior of the plasterboard and a coating slip deposited on said facing paper, **characterised in that** the coating slip contains plastic pigments as whitening agents.

2. Plasterboard as claimed in claim 1 **characterised in that** the coating slip contains at least 5% by weight of plastic pigments.

3. Plasterboard as claimed in claim 2 **characterised in that** the coating slip contains between 5% and 40% by weight of plastic pigments, and more preferably between 15 and 25% by weight of plastic pigments.

4. Plasterboard as claimed in claim 3 **characterised in that** the coating slip contains approximately 13% by weight of plastic pigments.

5. Plasterboard as claimed in one of claims 1 to 4 **characterised in that** the coating slip is applied in the proportion of approximately 10 to 45 g/m², and more preferably in the proportion of approximately 20 to 30 g/m².

6. Plasterboard as claimed in one of the preceding claims **characterised in that** the plastic pigments are chosen from among plastic pigments with filled particles or with hollow particles.

7. Plasterboard as claimed in one of the preceding claims **characterised in that** the coating slip contains, in addition to the plastic pigments:
- at least 25% fillers, more preferably calcium carbonate, and more preferably at approximately 44%;
- a sufficient quantity of water;
- a dispersing agent;
- a defoamer;
- at least 8% of binder;
- an insolubilising agent, more preferably an aliphatic epoxy resin;
- a biocide, more preferably an organo-sulturated/nitrogenous agent (organosulphur/azotee).

8. Plasterboard as claimed in claim 7 **characterised in that** the binder is formed from a synthetic latex or from a combination of synthetic latexes, the binder(s) being incorporated in the coating slip in the proportion of at least 10% and more preferably of at least 12% by weight.

9. Plasterboard as claimed in claim 8 **characterised in that** the synthetic latex(es) are incorporated in the proportion of at least 15% by weight in the coating slip.

10. Plasterboard as claimed in claim 8 or 9 **characterised in that** the binder is composed of styrene-butadiene.

11. Plasterboard as claimed in one of claims 7 to 10 **characterised in that** the coating slip additionally contains titanium dioxide in the proportion of approximately 10% by weight.

12. Plasterboard as claimed in one of claims 7 to 11 **characterised in that** the coating slip additionally contains sodium hydroxide.

13. Plasterboard as claimed in one of claims 7 to 12 **characterised in that** the coating slip additionally contains ammonium.

14. Plasterboard as claimed in one of claims 7 to 13 **characterised in that** the coating slip additionally contains oxidized maize starch, more preferably in the proportion of approximately 15% by weight.

15. Coating slip designed to be coated on the upper layer of a facing paper of a plasterboard **characterised in that** the plasterboard contains plastic pigments as whitening agents.

16. Coating slip as claimed in claim 15 **characterised in that** the coating slip contains at least 5% by weight of plastic pigments.

17. Coating slip as claimed in claim 16 **characterised in that** the coating slip contains between 5% and 40% by weight of plastic pigments, and more preferably between 15 and 25% by weight of plastic pigments.

18. Coating slip as claimed in claim 17 **characterised in that** the coating slip contains approximately 13% by weight of plastic pigments.

19. Coating slip as claimed in one of claims 15 to 18 **characterised in that** the plastic pigments are chosen from among plastic pigments with filled particles or with hollow particles.

20. Coating slip as claimed in one of claims 15 to 19 **characterised in that** the coating slip contains, in addition to the plastic pigments:
- at least 25% fillers, more preferably calcium carbonate, and more preferably approximately 44%;
- a sufficient quantity of water;
- a dispersing agent;
- a defoamer;
- at least 8% binder;
- an insolubilising agent, more preferably an aliphatic epoxy resin;
- a biocide, more preferably an organo-sulfurated/nitrogenous agent (organosulphur/azotee).

21. Coating slip as claimed in claim 20 **characterised in that** the binder is formed from a synthetic latex or a combination of synthetic latexes, the binder(s) being incorporated in the coating slip in the proportion of at least 10% by weight and more preferably at least 12%.

22. Coating slip as claimed in claim 21 **characterised in that** synthetic latex(es) are incorporated in the proportion of at least 15% by weight in the coating slip.

23. Coating slip as claimed in claim 21 or 22 **characterised in that** the binder is composed of styrene-butadiene.

24. Coating slip as claimed in one of claims 20 to 23 **characterised in that** the coating slip additionally contains titanium dioxide in the proportion of approximately 10% by weight.

25. Coating slip as claimed in one of claims 20 to 24 **characterised in that** the coating slip additionally contains sodium hydroxide.

26. Coating slip as claimed in one of claims 20 to 25 **characterised in that** the coating slip additionally contains ammonium.

27. Coating slip as claimed in one of claims 20 to 26 **characterised in that** the coating slip additionally contains oxidized maize starch, more preferably in the proportion of approximately 15% by weight.

28. Manufacturing process for plasterboard comprising at least one facing paper forming the exterior of the plasterboard on which a coating slip is deposited on the upper surface of the facing paper **characterised in that** a coating slip is deposited containing plastic pigments as whitening agents.

29. Manufacturing process as claimed in claim 28 **characterised in that** the coating slip contains at least 5% by weight of plastic pigments.

30. Manufacturing process as claimed in claim 29 **characterised in that** the coating slip contains between 5% and 40% by weight of plastic pigments, and more preferably between 15 and 25% by weight of plastic pigments.

31. Manufacturing process as claimed in one of claims 28 to 30 **characterised in that** the application of the coating slip is done in the proportion of 10 to 45 g/m², more preferably in the proportion of approximately 20 to 30 g/m².

32. Manufacturing process as claimed in one of claims 28 to 31 **characterised in that** the application of the coating slip is taken care of before the operation of the pouring of the plaster core or after the formation of the plasterboard.

33. Process as claimed in claim 32 **characterised in that** the coating of the paper takes place at the stage of manufacture of the paper.

34. Use of plastic pigments as whitening agents in a coating slip for facing paper designed for plasterboard.

## Patentansprüche

1. Gipsplatte, die mindestens ein Deckpapier, welches das Äußere der Platte bildet, aufweist sowie eine Streichmasse, welche auf das Deckpapier aufgebracht wird, **dadurch gekennzeichnet, dass** die Streichmasse Kunststoffpigmente als Mittel zur Erhöhung des Weißgrades umfasst.

2. Gipsplatte nach Anspruch 1, **dadurch gekennzeichnet, dass** die Streichmasse mindestens 5 Gew.-% an Kunststoffpigmenten umfasst.

3. Gipsplatte nach Anspruch 2, **dadurch gekennzeichnet, dass** die Streichmasse zwischen 5 und 40 Gew.-% an Kunststoffpigmenten, und vorzugsweise zwischen 15 und 25 Gew.-% an Kunststoffpigmenten, umfasst.

4. Gipsplatte nach Anspruch 3, **dadurch gekennzeichnet, dass** die Masse ungefähr 13 Gew.-% an Kunststoffpigmenten umfasst.

5. Gipsplatte nach einem der Ansprüche 1 bis 4, **dadurch gekennzeichnet, dass** die Masse in einer Menge von ungefähr 10 bis 45 g/m², und vorzugsweise in einer Menge von ungefähr 20 bis 30 g/m², zugeführt wird.

6. Gipsplatte nach einem der vorhergehenden Ansprüche, **dadurch gekennzeichnet, dass** die Kunststoffpigmente aus den Kunststoffpigmenten mit Vollpartikeln oder mit Hohlpartikeln ausgewählt sind.

7. Gipsplatte nach einem der vorhergehenden Ansprüche, **dadurch gekennzeichnet, dass** die Masse zusätzlich zu den Kunststoffpigmenten Folgendes umfasst:
- mindestens 25 % an Füllstoffen, vorzugsweise Calciumcarbonat, und vorzugsweise zu ungefähr 44%;
- eine ausreichende Menge an Wasser;
- ein Dispergiermittel;
- einen Schaumverhüter;
- mindestens 8 % an Bindemittel;
- ein löslichkeitshemmendes Mittel, vorzugsweise ein aliphatisches Epoxidharz;
- ein Biozid, vorzugsweise ein schwefelhaltiges/stickstoffhaltiges organisches Mittel.

8. Gipsplatte nach Anspruch 7, **dadurch gekennzeichnet, dass** das Bindemittel von einem synthetischen Latexstoff oder einer Kombination synthetischer Latexstoffe gebildet wird, wobei das oder die Bindemittel der Masse in einer Menge von mindestens 10 Gew.-% und vorzugsweise von mindestens 12 Gew.-% beigemischt werden.

9. Gipsplatte nach Anspruch 8, **dadurch gekennzeichnet, dass** der oder die synthetischen Latexstoffe der Streichmasse in einer Menge von mindestens 15 Gew.-% beigemischt werden.

10. Gipsplatte nach Anspruch 8 oder 9, **dadurch gekennzeichnet, dass** es sich bei dem Bindemittel um StyrolButadien handelt.

11. Gipsplatte nach einem der Ansprüche 7 bis 10, **dadurch gekennzeichnet, dass** die Masse darüber hinaus Titandicxid in einer Menge von ungefähr 10 Gew.-% umfasst.

12. Gipsplatte nach einem der Ansprüche 7 bis 11, **dadurch gekennzeichnet, dass** die Masse darüber hinaus Natriumhydroxid umfasst.

13. Gipsplatte nach einem der Ansprüche 7 bis 12, **dadurch gekennzeichnet, dass** die Masse darüber hinaus Ammonium umfasst.

14. Gipsplatte nach einem der Ansprüche 7 bis 13, **dadurch gekennzeichnet, dass** die Masse darüber hinaus oxidierte Maisstärke umfasst, vorzugsweise in einer Menge von ungefähr 15 Gew.-%.

15. Streichmasse, die zum Streichen der oberen Schicht eines Deckpapiers einer Gipsplatte bestimmt ist, **dadurch gekennzeichnet, dass** sie Kunststoffpigmente als Mittel zur Erhöhung des Weißgrads umfasst.

16. Streichmasse nach Anspruch 15, **dadurch gekennzeichnet, dass** die Streichmasse mindestens 5 Gew.-% an Kunststoffpigmenten umfasst.

17. Streichmasse nach Anspruch 16, **dadurch gekennzeichnet, dass** die Streichmasse zwischen 5 und 40 Gew.-% an Kunststoffpigmenten, und vorzugsweise zwischen 15 und 25 Gew.-% an Kunststoffpigmenten, umfasst.

18. Streichmasse nach Anspruch 17, **dadurch gekennzeichnet, dass** die Masse ungefähr 13 Gew.-% an Kunststoff - pigmenten umfasst.

19. Streichmasse nach einem der Ansprüche 15 bis 18, **dadurch gekennzeichnet, dass** die Kunststoffpigmente aus den Kunststoffpigmenten mit Vollpartikeln oder mit Hohlpartikeln ausgewählt sind.

20. Streichmasse nach einem der Ansprüche 15 bis 19, **dadurch gekennzeichnet, dass** die Masse zusätzlich zu den Kunststoffpigmenten Folgendes umfasst:
- mindestens 25 % an Füllstoffen, vorzugsweise Calciumcarbonat, und vorzugsweise ungefähr 44%;
- eine ausreichende Menge an Wasser;
- ein Dispergiermittel;
- einen Schaumverhüter;
- mindestens 8 % an Bindemittel
- ein löslichkeitshemmendes Mittel, vorzugsweise ein aliphatisches Epoxidharz;
- ein Biozid, vorzugsweise ein schwefelhaltiges/stickstoffhaltiges organisches Mittel.

21. Streichmasse nach Anspruch 20, **dadurch gekennzeichnet, dass** das Bindemittel von einem synthetischen Latexstoff oder einer Kombination synthetischer Latexstoffe gebildet wird, wobei das oder die Bindemittel der Masse in einer Menge von mindestens 10 Gew.-% und vorzugsweise von mindestens 12 Gew.-% beigemischt werden.

22. Streichmasse nach Anspruch 21, **dadurch gekennzeichnet, dass** der oder die synthetischen Latexstoffe der Streichmasse in einer Menge von mindestens 15 Gew.-% beigemischt werden.

23. Streichmasse nach Anspruch 21 oder 22, **dadurch gekennzeichnet, dass** es sich bei dem Bindemittel um StyrolButadien handelt.

24. Streichmasse nach einem der Ansprüche 20 bis 23, **dadurch gekennzeichnet, dass** die Masse darüber hinaus Titandioxid in einer Menge von ungefähr 10 Gew.-% umfasst.

25. Streichmasse nach einem der Ansprüche 20 bis 24, **dadurch gekennzeichnet, dass** die Masse darüber hinaus Natriumhydroxid umfasst.

26. Streichmasse nach einem der Ansprüche 20 bis 25, **dadurch gekennzeichnet, dass** die Masse darüber hinaus Ammonium umfasst.

27. Streichmasse nach einem der Ansprüche 20 bis 26, **dadurch gekennzeichnet, dass** die Masse darüber hinaus oxidierte Maisstärke umfasst, vorzugsweise in einer Menge von ungefähr 15 Gew.-%.

28. Verfahren zur Herstellung einer Gipsplatte, die mindestens ein Deckpapier aufweist, welches das Äußere der Platte bildet, wobei eine Streichmasse auf die Oberseite des Deckpapiers aufgebracht wird, **dadurch gekennzeichnet, dass** eine Streichmasse aufgebracht wird, die Kunststoffpigmente als Mittel zur Erhöhung des Weißgrades umfasst.

29. Herstellungsverfahren nach Anspruch 28, **dadurch gekennzeichnet, dass** die Streichmasse mindestens 5 Gew.-% an Kunststoffpigmenten umfasst.

30. Herstellungsverfahren nach Anspruch 29, **dadurch gekennzeichnet, dass** die Streichmasse zwischen 5 und 40 Gew.-% an Kunststoffpigmenten, und vorzugsweise zwischen 15 und 25 Gew.-% an Kunststoffpigmenten, umfasst.

31. Herstellungsverfahren nach einem der Ansprüche 28 bis 30, **dadurch gekennzeichnet, dass** sichergestellt wird, dass die Streichmasse in einer Menge von 10 bis 45 g/m², vorzugsweise in einer Menge von ungefähr 20 bis 30 g/m², aufgebracht wird.

32. Herstellungsverfahren nach einem der Ansprüche 28 bis 31, **dadurch gekennzeichnet, dass** sichergestellt wird, dass die Streichmasse vor dem Vorgang des Gießens des Plattenkerns oder nach der Bildung der Gipsplatte zugeführt wird.

33. Verfahren nach Anspruch 32, **dadurch gekennzeichnet, dass** das Streichen des Papiers erfolgt, sobald sich das Papier im Stadium der Herstellung befindet.

34. Verwendung von Kunststoffpigmenten als Mittel zur Erhöhung des Weißgrads in einer Streichmasse für Deckpapier, das für eine Gipsplatte bestimmt ist.
